# EUROPEAN PATENT APPLICATION

(11) **EP 0 549 317 A2**
(43) Date of publication of application: **30.06.1993**
(21) Application number: 92311680.0
(22) Date of filing: 22.12.1992
(51) Int. Cl.: B29D 30/06

(54) **Method of vulcanising a green tyre**

(30) Priority: 27.12.1991 JP 346933/91
(71) Applicant: SUMITOMO RUBBER INDUSTRIES LIMITED, Chuo-ku Kobe-shi Hyogo 651 (JP)
(72) Inventor: Iseki, Tsutomu, Nishi-Shirakawa-gun, Fukushima (JP)
(74) Representative: Stewart, Charles Geoffrey

(57) **Abstract**

A method of vulcanising a green tyre, characterised by the steps of positioning a green tyre (1) over a bladder (5) supported by an upper ring part (6) and a lower ring part (7) in such a manner to be concentric to each other, lowering said green tyre (1) to a position where the horizontal centre line of the green tyre (1) corresponds to that of the bladder (5), lowering said upper ring part (6) to the upper end portion of the green tyre (1) and raising said lower ring part (7) to the lower end portion of the green tyre (1), expanding the bladder (5) to closely contact the inside of the green tyre (1), simultaneously lowering the upper ring part (6) and the lower ring part (7) by the same amount until the lower ring part (7) abuts a fixed lower mould (4), and lowering a movable upper mould to close the mould.

## Description

The present invention relates to a method for inserting green tyres into vulcanising moulds in a process of manufacturing pneumatic tyres.

In the manufacture of a pneumatic tyre, there is the process of inserting a green tyre, which is made by a green tyre building machine, into the vulcanising mould of a tyre press, and vulcanising the green tyre at a specified temperature and pressure for a specified time.

If the green tyre is positioned eccentrically in the vulcanising mould, the resultant vulcanised tyre is poor in uniformity. Accordingly, the green tyre must be accurately positioned into the vulcanising mould. However, difficulties have arisen in accurately setting the green tyre into the vulcanising mould.

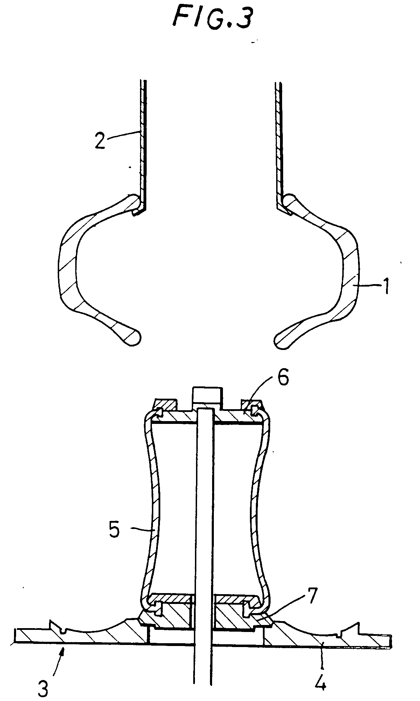

Namely, the method of inserting the green tyre into the vulcanising mould as shown in Figures 3 to 6, results in the green tyre not being accurately positioned in the vulcanising mould.

Specifically, as shown in Figure 3, a green tyre 1 is suspended on an inserting loader 2, and is then carried sidewise to a position over a fixed lower mould 4.

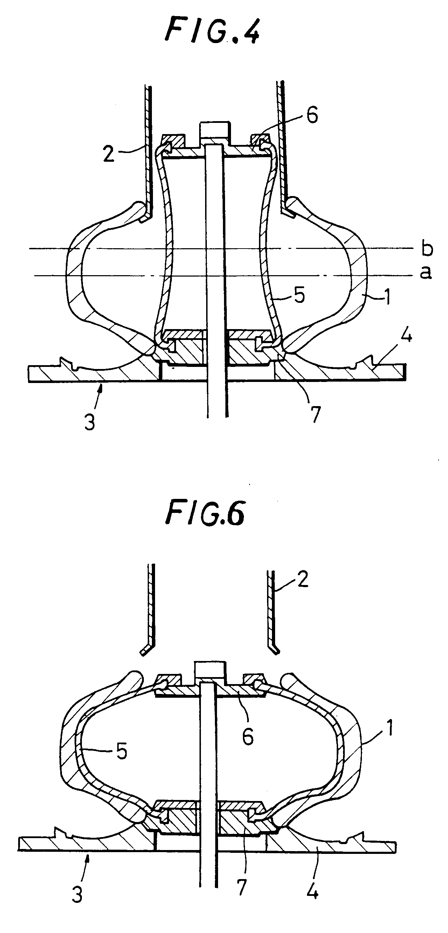

The loader 2, as shown in Figure 4, is lowered until the lower portion of the green tyre 1 contacts the lower ring part 7.

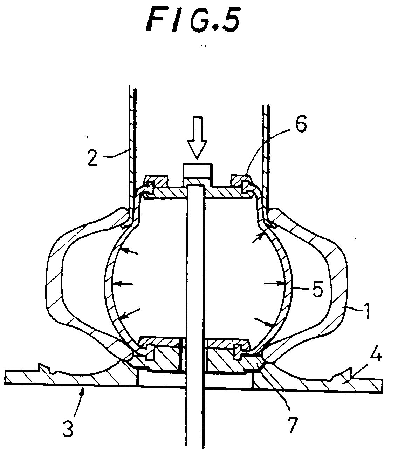

Subsequently, as shown in Figure 5, an upper ring part 6 is lowered and simultaneously a bladder 5 is supplied with a pressure medium therein and is thus expanded.

Then, as shown in Figure 6, when the upper ring part 6 has descended to the position of the upper end portion of the green tyre 1, the green tyre 1 is separated from the loader 2 and remains on the fixed lower mould 4. Next, the vulcanising mould 3 is clamped, and the green tyre 1 is vulcanised.

The mould also comprises a movable upper mould ring, an intermediate mould and the like, other than the above fixed lower mould 4. Also, a centre mechanism is provided on the centre portion of the fixed lower mould 4, and the bladder 5 is disposed on the centre mechanism. The bladder 5 is supported at both edges by the upper ring part 6 and the lower ring part 7 respectively. The upper and lower ring parts 6 and 7 are connected to a cylinder or the like (not shown) so they may be raised and lowered.

The above inserting method has a disadvantage that, in the state shown in Figure 4, the horizontal centre line <a> of the green tyre 1 is vertically displaced from the horizontal centre line <b> of the bladder 5, which causes the non-uniformity of the tyre in the later process.

Namely, as shown in Figure 5, when the pressure medium is supplied into the bladder 5, the bladder 5 contacts the lower side of the green tyre 1, and the ongoing contact then shifts to the upper side.

For this reason, the bladder 5 is susceptible to extension on the upper side, and accordingly, in the state of fixing the green tyre 1, it is more greatly expanded at its upper portion thereof. Thus, the vulcanised tyre is susceptible to distortion generated between the upper and lower portions thereof, resulting in the poor tyre uniformity (mainly, conicity).

Also in terms of final quality, since the green tyre 1 has a larger extension at its upper portion, there may be rubber weakening in the finished tyre leading to tyre failure. Also, as the above phenomenon is repeated, the bladder 5 becomes thinner at its upper portion, thereby enlarging the effects on the tyre product.

An object of the present invention is to provide a method of vulcanising a green tyre capable of eliminating differences and distortion generated between the upper and lower portions of the green tyre thereby improving the quality of the tyre product.

According to one aspect of the present invention a method of vulcanising a green tyre, comprises the steps of positioning a green tyre over a bladder supported by an upper ring part and a lower ring part in such a manner to be concentric to each other, lowering said green tyre to a position where the horizontal centre line of the green tyre corresponds to that of the bladder, lowering said upper ring part to the upper end portion of the green tyre and raising said lower ring part to the lower end portion of the green tyre, expanding the bladder to closely contact the inside of the green tyre, simultaneously lowering the upper ring part and the lower ring part by the same amount until the lower ring part abuts a fixed lower mould, and lowering a movable upper mould to close the mould.

As a result it is possible to prevent vertical deviation between the green tyre and the bladder, and hence to eliminate non-uniformity of the thickness between the upper and lower portions of the tyre. This makes it possible to eliminate the vertical offset of the tyre product.

Hereinafter, the embodiment of the present invention will be described in detail with reference to the accompanying drawings in which:
Figure 1 is a first sectional view showing an embodiment of the present invention;
Figure 2 is a second sectional view;
Figure 3 is a sectional view showing a first step of the inserting method of the prior art;
Figure 4 is a sectional view showing a second step of the inserting method of the prior art;
Figure 5 is a sectional view showing a third step of the inserting method of the prior art;
Figure 6 is a sectional view showing a fourth step of the inserting method of the prior art.

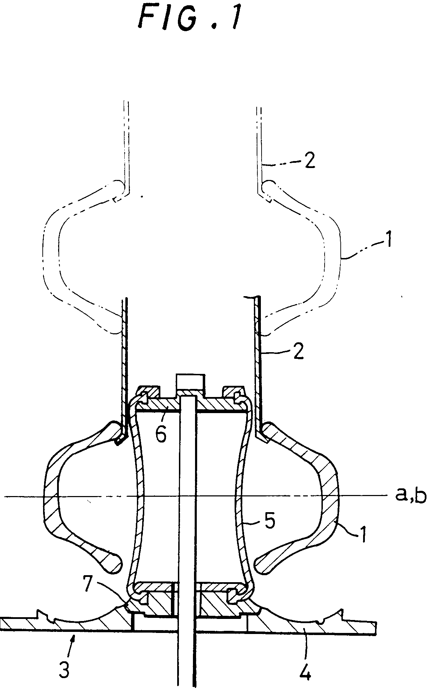

As shown in the virtual line of Figure 1, a green tyre 1 is hung by a loader 2, and this is carried to a position over a vulcanising mould 3. After that, as shown by the solid line of Figure 1, the loader 2 is lowered. At this time, the loader 2 descends to the extent that the horizontal centre line <a> of the green tyre 1 corresponds to the horizontal centre line <b> of a bladder 5 interposed between an upper ring part 6 and a lower ring part 7. At the position where both the centre lines <a> and <b> correspond to each other, the loader 2 is stopped. In such a state, naturally, the green tyre 1 is not in contact with the lower ring part 7.

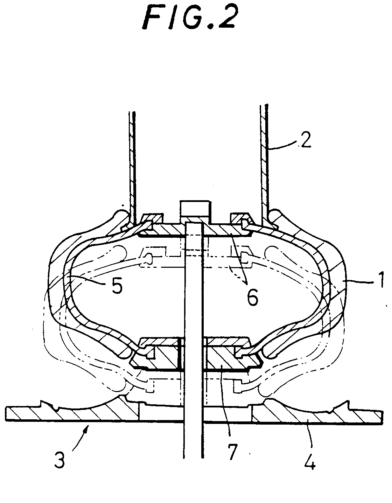

Subsequently, the upper ring part 6 and the lower ring part 7 are oppositely simultaneously moved towards the centre line <a> side of the bladder 5 to be approximately matched to both the upper and lower end portions of the green tyre 1 respectively, as shown by the solid line in Figure 2. Then, the bladder 5 is supplied with a pressure medium so it is expanded, and closely contacts the inner surface of the green tyre 1, thereby fixing and holding the green tyre 1 from the inside.

Still at this stage, both the horizontal centre lines of the bladder 5 and the green tyre 1 correspond to each other.

After that, the loader 2 is separated from the green tyre 1, and thus the green tyre 1 and the bladder 5 are supported by the upper ring part 6 and the lower ring part 7.

Next, the upper ring part 6 and the lower ring part 7 are simultaneously lowered by the same amount, and both the green tyre 1 and the bladder 5 are lowered together. Then, the green tyre 1 is placed on to a fixed lower mould 4, as shown by the virtual line in Figure 2.

Thus, the inserting process before vulcanisation is completed, and thereafter, the vulcanising mould 3 is completely brought together and clamped and the green tyre 1 is vulcanised.

With this arrangement, it is possible to improve the accuracy of the vertical positioning between the green tyre 1 and the bladder 5, and hence to eliminate the vertical non-uniformity in the vulcanising process which has never been solved in the conventional manner. This makes it possible to eliminate vertical offset in the tyre product.

In other words, when the green tyre 1 is inserted in to the vulcanising mould 3, the bladder 5 is simultaneously set at the same centre line as that of the green tyre 1, thereby eliminating the vertical offset of the green tyre 1 in the process of vulcanising the green tyre 1.

While a preferred embodiment of the present invention has been described using specific terms, such description is for illustrative purposes only, and it is to be understood that changes and variations may be made without departing from the spirit or scope of the following claims.

## Claims

1. A method of vulcanising a green tyre, characterised by the steps of positioning a green tyre (1) over a bladder (5) supported by an upper ring part (6) and a lower ring part (7) in such a manner to be concentric to each other, lowering said green tyre (1) to a position where the horizontal centre line of the green tyre (1) corresponds to that of the bladder (5), lowering said upper ring part (6) to the upper end portion of the green tyre (1) and raising said lower ring part (7) to the lower end portion of the green tyre (1), expanding the bladder (5) to closely contact the inside of the green tyre (1), simultaneously lowering the upper ring part (6) and the lower ring part (7) by the same amount until the lower ring part (7) abuts a fixed lower mould (4), and lowering a movable upper mould to close the mould.

2. A method of vulcanising a green tyre according to claim 1, characterised by the steps of hanging the green tyre (1) on a loader (2) and moving said loader (2) in such a manner that the green tyre (1) is positioned concentrically over the bladder (5) supported by the upper ring part (6) and the lower ring part (7).

3. A method of vulcanising a green tyre according to claim 2, characterised in that the process of hanging the green tyre (1) with said loader (2) includes the step of removably engaging the lower end portion of the loader (2) on the inner side of the upper edge of said green tyre (1).

4. A method according to claims 1, 2 or 3 characterised by lowering the upper ring part (6) to the upper end portion of said green tyre (1) and raising the lower ring part (7) to the lower end portion of said green tyre (1) wherein the movements of the upper ring part (6) and the lower ring part (7) are the same amount.
